## Europäisches Patentamt
## European Patent Office
## Office européen des brevets

(19)

(11) Numéro de publication: **0 251 964**
**B1**

(12) **FASCICULE DE BREVET EUROPEEN**

(45) Date de publication du fascicule du brevet:
12.09.90

(51) Int. Cl.⁵: **B29C 37/00, B29C 67/14**

(21) Numéro de dépôt: 87450015.0

(22) Date de dépôt: 24.06.87

(54) Rouleau presseur débulleur.

(30) Priorité: 24.06.86 FR 8609243

(43) Date de publication de la demande:
07.01.88 Bulletin 88/1

(45) Mention de la délivrance du brevet:
12.09.90 Bulletin 90/37

(84) Etats contractants désignés:
AT BE CH DE ES GB GR IT LI LU NL SE

(56) Documents cités:
DE-A- 1 704 946
DE-A- 2 841 085
FR-A- 1 520 199
FR-A- 2 566 014
US-A- 2 321 511
US-A- 3 717 899
US-A- 3 970 396

KUNSTSTOFF-RUNDSCHAU,
vol. 9, septembre 1968, pages 479-485, Hannover, DE; G. MENGES et al.: "Rationalisierungsmöglichkelten bei der Herstellung von GFK-Erzeugnissen nach dem Handverfahren"

(73) Titulaire: S.A.R.L. DIAS INDUSTRIE, Avenue de la Côte d'Argent, F-33380 MARCHEPRIME(FR)

(72) Inventeur: Vandenbussche, Guy, 9 avenue Jean Racine, F-33470 Gujan-Mestras(FR)

(74) Mandataire: Thébault, Jean-Louis, Cabinet Thébault S.A. 50 Cours de Verdun, F-33000 Bordeaux(FR)

**Description**

La présente invention a trait à un appareil destiné à permettre une meilleure évacuation des bulles d'air retenues prisonnières, en particulier dans les tissus imprégnés, un tel appareil étant communément appelé débulleur.

Au cours de la fabrication de stratifiés à partir de couches superposées de tissu imprégnées de résine polymérisable, il est nécessaire, avant d'effectuer la polymérisation, de procéder à l'extraction du maximum de bulles d'air emprisonnées notamment entre les diverses couches de tissu.

On connaît déjà des appareils manuels de pressage de tissus imprégnés à l'aide de rouleaux ou cylindres montés libres en rotation sur un axe soumis à des vibrations appliquées à l'aide d'un vibrateur monté sur l'appareil, voir par exemple FR-A 2 566 014.

Ces dispositifs ne donnent pas pleinement satisfaction en particulier dans le cas de traitement de surfaces incurvées notamment lors de la fabrication de coques de bâteaux, car les rouleaux ne sont pas adaptés dans leur morphologie et leur montage à ce type de surfaces.

Le but de l'invention est précisément de proposer un nouveau type de rouleau spécifiquement adapté à cet usage et capable d'assurer efficacement et facilement le débullage.

A cet effet, l'invention a pour objet un rouleau presseur débulleur pour appareil du type comprenant au moins un arbre porteur solidaire d'une pièce pòrtant lui-même un vibrateur générant des vibrations dont la direction est sensiblement perpendiculaire audit arbre porteur, ledit rouleau étant caractérisé en ce qu'il est constitué de deux demi-rouleaux identiques disposés coaxialement et montés libres en rotation sur deux manchons cylindriques internes fixés sur les deux extrémités dudit arbre porteur par une articulation conférant un léger débattement angulaire, uniquement dans un plan perpendiculaire au plan de travail et à la direction d'avancement de l'appareil, de l'axe de chaque demi-rouleau par rapport à l'axe de l'arbre porteur, ce dernier étant solidaire dans sa partie centrale d'une pièce amovible de raccordement au bâti dudit appareil.

Suivant un mode de réalisation préféré, ledit manchon cylindrique interne de chaque demi-rouleau est enfilé sur l'une des extrémités de l'arbre porteur, laquelle est sphérique, de diamètre correspondant à celui dudit manchon et traversée par une goupille dont les extrémités sont solidaires du manchon et dont l'axe est orthogonal, d'une part, à l'axe de l'arbre et, d'autre part, à la direction d'application desdites vibrations, ladite partie sphérique étant sensiblement dans la partie centrale du rouleau.

Suivant une autre caractéristique remarquable de l'invention, la surface externe cylindrique de chaque demi-rouleau comporte, d'une extrémité l'autre, une gorge hélicoïdale continue, les parties en saillie délimitées par cette gorge comportant des filetages de sens contraire à celui de la gorge et de profondeur et pas nettement inférieurs à ceux de cette dernière.

Avantageusement les parties extrêmes des demi-rouleaux sont arrondies, lesdites parties en saillie avec leur filetages étant ces endroits de hauteur progressivement réduite en direction des extrémités des demi-rouleaux.

D'autres caractéristiques et avantages ressortiront de la description qui va suivre d'un mode de réalisation du dispositif de l'invention, description donnée à titre d'exemple uniquement et en regard des dessins annexés sur lesquels :

- Figure 1 représente une vue de profil d'un appareil à rouleau presseur débulleur conforme à l'invention ;
- Figure 2 est une vue de face de l'appareil de la figure 1 ;
- Figure 3 est une vue en coupe axiale verticale agrandie des demi-rouleaux de l'appareil de la figure 2 ;
- Figure 4 est une vue en coupe axiale partielle d'une extrémité d'un demi-rouleau, et
- Figure 5 est une vue partielle de la surface externe d'un demi-rouleau.

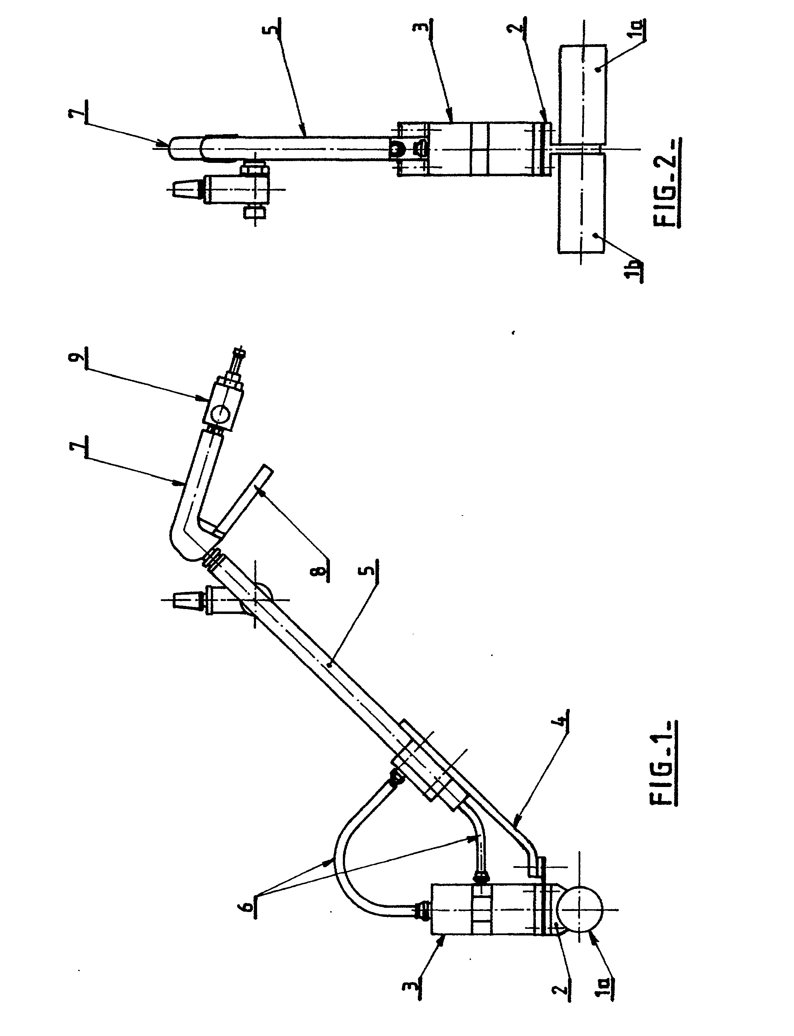

L'appareil représenté sur les figures 1 et 2 comprend un rouleau presseur constitué de deux demi-rouleaux identiques 1a,1b portés par un arbre commun lui-même solidaire d'une pièce 2 en forme de T fixée à l'extrémité d'un ensemble vibrateur 3 susceptible d'appliquer audit arbre des vibrations suivant une direction perpendiculaire à ce dernier.

L'ensemble 2-3 est monté à l'extrémité d'un manche formé d'un bras 4 et d'un cylindre métallique allongé 5 servant à l'alimentation en air comprimé par des flexibles 6 du vibrateur 3.

Le manche 4-5 est conformé à son extrémité en poignée 7 munie d'un levier de commande 8 et d'un raccord 9 de branchement à une source d'air comprimé (non représentée).

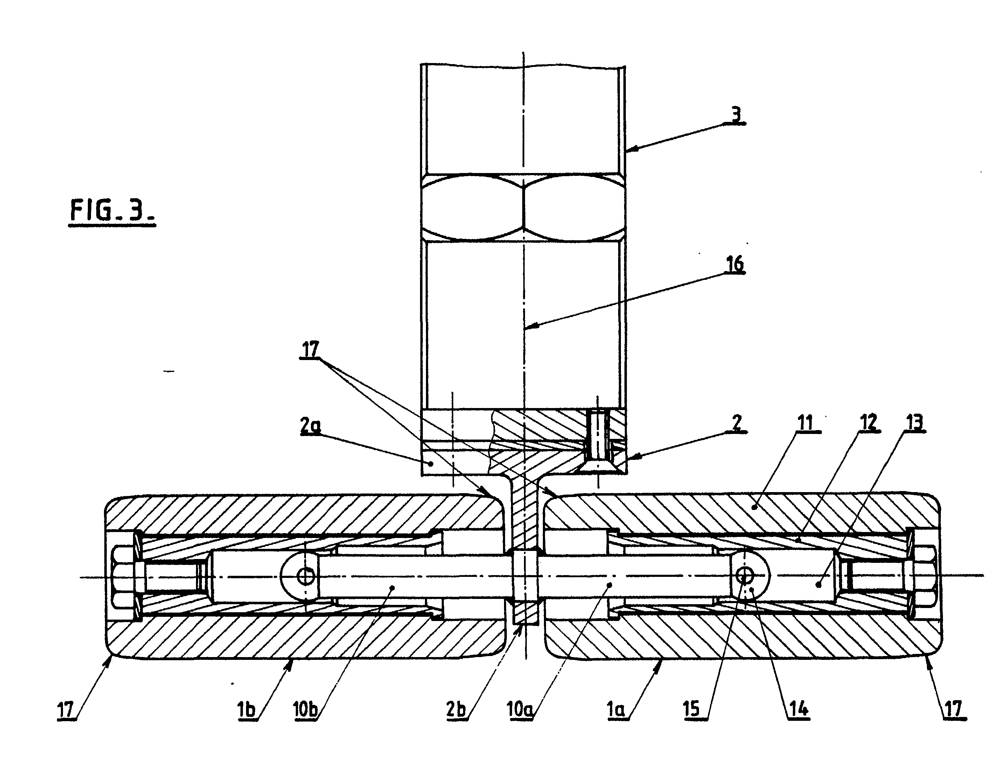

Les demi-rouleaux 1a,1b schématisés sur les figures 1 et 2 et qu'on appellera dans la suite rouleaux, sont représentés en détail sur les figures 3 à 5.

Dans le mode de réalisation représenté, les deux rouleaux 1a,1b sont identiques coaxiaux et symétriquement disposés par rapport à la pièce en T 2 dont une partie 2a forme bride de raccordement par vis à la face d'extrémité du bloc cylindrique du vibrateur 3 et dont une partie 2b perpendiculaire à la partie 2a est fixée par exemple par soudage à un arbre dans sa partie centrale. Cet arbre se présente sous la forme de deux demi-arbres 10a,10b sur chacun desquels est enfilé l'un des rouleaux 1a,1b.

Chaque rouleau comprend un manchon cylindrique 11 par exemple en matière plastique appropriée dans l'évidement intérieur duquel est monté de manière tourillonnante un manchon métallique 12 présentant un espace interne cylindrique 13 dans lequel est engagée une proéminence sphérique 14 solidaire de l'extrémité du demi-arbre 10a,10b considéré.

Le diamètre de la proéminence 14 est légèrement supérieur à celui des demi-arbres et égal à celui de l'espace cylindrique 13.

Une goupille 15 traverse diamétralement la partie sphérique 14 en étant fixée à ses extrémités au manchon 12. L'axe de la goupille 15 est perpendiculaire à la fois à l'axe de l'arbre 10a,10b et à la direction, symbolisée en 16 sur la figure 3, d'application des vibrations par le vibrateur 3 audit arbre porte-rouleaux. La goupille 15 est agencée de manière à autoriser un libre débattement angulaire de l'axe de chaque rouleau autour de l'axe de la goupille, par rapport à l'axe de l'arbre 10a,10b.

L'amplitude de ce débattement est par exemple de 5 à 10°. L'agencement intérieur des rouleaux, côté pièce 2, est réalisé de manière à permettre ce libre débattement, un espace suffisant étant prévu entre l'extrémité des rouleaux et ladite pièce 2.

La surface externe des rouleaux est cylindrique excepté au voisinage des extrémités, en 17, où l'arête est cassée et présente des caractéristiques tout à fait particulières.

Cette surface est en effet parcourue sur toute la longueur du rouleau 1a, 1b par une gorge hélicoïdale continue 18 par exemple avec un pas à gauche de 6mm, une profondeur de 2mm pour un diamètre externe du rouleau de 40mm et une largeur de 3mm.

La saillie hélicoïdale 19 délimitée par la gorge est elle-même pourvue de filets 20 de dimensions sensiblement inférieures à celles de la gorge 18 et possédant un pas nettement réduit et à droite comme on peut le voir sur la figure 5 qui représente une partie de la surface d'un rouleau dans sa zone médiane.

Pour les dimensions données ci-dessus de la gorge 18, les filets 20 ont par exemple une largeur, de crête à crête, de 1,5mm, une profondeur de 1mm, le pas étant de 1,5mm.

Les arêtes séparant les filets 20 sont légèrement émoussées en 21.

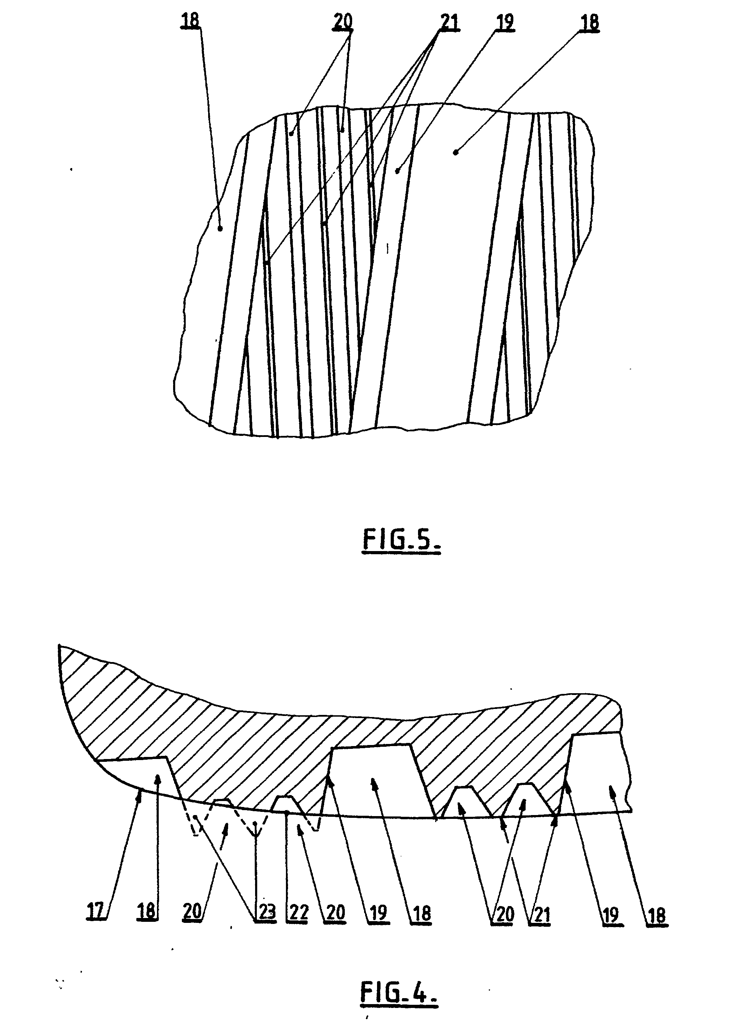

On a représenté en 22 sur la figure 4 la ligne de courbure générale des rouleaux 1a,1b au voisinage de leurs extrémités.

Cette ligne 22 assure un raccordement progressif avec les flancs des rouleaux et efface substantiellement et progressivement les arêtes des filets 20 les plus proches des extrémités des rouleaux au point que le filet 20 extrême, comme représenté en 23 sur la figure 4, est pratiquement entièrement tronqué.

L'appareil selon l'invention permet d'épouser étroitement les surfaces incurvées de tissus imprégnés à débuller notamment dans le cas des fabrications des coques de bâteau, grâce aux débattements angulaires, uniquement dans un plan perpendiculaire à la fois au plan de travail et à la direction d'avancement de l'appareil, des rouleaux 1a,1b autour des goupilles 15, les axes des rouleaux formant alors entre eux un angle inférieur ou supérieur à 180° selon que l'on presse les rouleaux sur une surface concave ou convexe.

Ainsi, chaque rouleau 1a,1b peut être pressé et rouler sur la surface à débuller avec une pression répartie sensiblement régulièrement d'une extrémité à l'autre du rouleau ce qui procure une très bonne homogénéité au débullage.

Les vibrations sont communiquées directement et sans atténuation à la périphérie des rouleaux grâce à la partie sphérique 14 totalement solidaire de l'arbre porteur, de la pièce 2 et de la carcasse du vibrateur 3, et qui est en contact direct et constant avec la douille interne 12, quelle que soit l'inclinaison de l'axe du rouleau sur l'axe de l'arbre porteur, ladite partie sphérique 14 étant située sensiblement au centre du rouleau.

La morphologie de la surface externe des rouleaux est remarquablement efficace. En effet, l'existence de gorges ou filets 18,20 de caractéristiques différentes et en particulier de pas contraires, procure une évacuation excellente et régulière des bulles emprisonnées dans les tissus imprégnés.

L'ensemble 10a,10b ; 1a,1b est facilement amovible et peut être remplacé instantanément par un autre ensemble dont les rouleaux présentent des caractéristiques différentes mieux adaptées au travail à exécuter, telles que le diamètre, la longueur, le débattement angulaire, les dimensions et agencements des gorges ou filets de surface 18,20.

Enfin, l'invention n'est évidemment pas limitée au mode de réalisation représenté et décrit ci-dessus mais en couvre au contraire toutes les variantes notamment en ce qui concerne les moyens de montage articulés des rouleaux 1a,1b aux extrémités de l'arbre support et la configuration de la surface active des rouleaux.

Il est également à noter que l'appareil représenté en figure 1 et 2 pourrait comporter deux paires de rouleaux 1a, 1b, alignées sur le même axe, chaque paire étant reliée, par une pièce telle que 2, à l'extrémité du bloc du vibrateur 3, lesdites pièces étant elles-mêmes de préférence articulées autour d'un axe parallèle à la direction d'avancement de l'appareil. Un tel appareil offre une largeur de travail bien plus importante.

**Revendications**

1. Rouleau presseur débulleur pour appareil du type comprenant au moins un arbre porteur (10a, 10b) solidaire d'un pièce (2) portant lui-même un vibrateur (3) générant des vibrations dont la direction est sensiblement perpendiculaire audit arbre porteur, ledit rouleau étant caractérisé en ce qu'il est constitué de deux demi-rouleaux identiques (1a,1b) disposés coaxialement et montés libres en rotation sur deux manchons cylindriques (12) internes fixés sur les deux extrémités dudit arbre porteur (10a,10b) par une articulation (14,15) conférant un léger débattement angulaire, uniquement dans un plan perpendiculaire au plan de travail et à la direction d'avancement de l'appareil, de l'axe de chaque demi-rouleau (1a, 1b) par rapport à l'axe de l'arbre porteur (10a, 10b), ce dernier étant solidaire dans sa partie centrale d'une pièce amovible (2) de raccordement au bâti (3,4) dudit appareil.

2. Rouleau suivant la revendication 1, caractérisé en ce que ledit manchon cylindrique (12) interne de chaque demi-rouleau (1a,1b) est enfilé sur l'une des extrémités de l'arbre porteur (10a,10b), laquelle (14) est sphérique, de diamètre correspondant à celui dudit manchon et traversée par une goupille (15) dont les extrémités sont solidaires du manchon et dont l'axe est orthogonal, d'une part, à l'axe de l'arbre et, d'autre part, à la direction (16) d'application desdites vibrations, ladite partie sphérique (14) étant sensiblement dans la partie centrale du rouleau (1a,1b).

3. Rouleau suivant la revendication 1 ou 2, caractérisé en ce que la surface externe cylindrique de chaque demi-rouleau (1a,1b) comporte, d'une extrémité à l'autre, une gorge hélicoïdale continue (18), les parties en saillie (19) délimitées par cette gorge comportant des filetages (20) de sens contraire à celui de la gorge (18) et de profondeur et pas nettement inférieurs à ceux de cette dernière.

4. Rouleau suivant la revendication 3, caractérisé en ce que les parties extrêmes des demi-rouleaux (1a,1b) sont arrondies, lesdites parties en saillie (19) avec leur filetages (20) étant à ces endroits de hauteur progressivement réduite en direction des extrémités des demi-rouleaux.

5. Rouleau suivant la revendication 3 ou 4, caractérisé en ce que les arêtes (21) des filets (20) sont émoussées.

**Patentansprüche**

1. Entlüftungsdruckrolle für einen Gerätetyp umfassend wenigstens eine Trägerachse (10a, 10b), die fest mit einem Teil (2) verbunden ist, das selbst einen Vibrator (3) trägt, der Vibrationen erzeugt, deren Richtung im wesentlichen senkrecht zu der besagten Trägerachse verläuft, wobei die besagte Rolle dadurch gekennzeichnet ist, daß sie aus zwei identischen Halbrollen (1a, 1b) gebildet wird, die koaxial angeordnet und frei drehbar auf zwei zylindrischen Innenhülsen (12) montiert sind, die auf den beiden Enden der besagten Trägerachse (10a, 10b) durch eine Anlenkung (14, 15) befestigt sind, die eine leichte Winkelbewegung einzig in einer Ebene senkrecht zur Arbeitsebene und zur Vorschubrichtung des Geräts der Achse jeder Halbrolle (1a, 1b) in bezug zur Achse der Trägerachse (10a, 10b) zuläßt, wobei letztere in ihrem mittleren Bereich mit einem auswechselbaren Verbindungsteil (2) zum Gestell (3, 4) des besagten Geräts verbunden ist.

2. Rolle gemäß Anspruch 1, dadurch gekennzeichnet, daß die besagte zylindrische Innenhülse (12) jeder Halbrolle (1a, 1b) auf das eine der Enden (14) der Trägerachse (10a, 10b) aufgeschoben ist, das sphärisch ist mit einem Durchmesser, der dem der besagten Hülse entspricht, und durchsetzt von einem Stift (15), dessen Enden mit der Hülse verbunden sind und dessen Achse senkrecht einerseits zur Achse der Trägerachse und andererseits zur Richtung (16) der Aufbringung der besagten Vibrationen ist, wobei der besagte sphärische Abschnitt (14) im wesentlichen im mittleren Abschnitt der Rolle (1a, 1b) ist.

3. Rolle gemäß Anspruch 1 oder 2, dadurch gekennzeichnet, daß die zylindrische Außenfläche jeder Halbrolle (1a, 1b) von einem Ende zum anderen eine kontinuierliche schraubenförmige Nut (18) umfaßt, wobei die durch diese Nut begrenzten vorspringenden Abschnitte Gewindegänge (20) im entgegengesetzten Drehsinn zu demjenigen der Nut (18) und einer Tiefe und Steigung deutlich kleiner als diejenigen der letzteren aufweist

4. Rolle gemäß Anspruch 3, dadurch gekennzeichnet, daß die Endabschnitte der Halbrollen (1a, 1b) abgerundet sind, wobei die besagten vorspringenden Abschnitte (19) mit ihren Gewindegängen (20) an diesen Stellen eine in Richtung der Enden der Halbrollen fortschreitend reduzierte Höhe aufweisen.

5. Rolle gemäß Anspruch 3 oder 4, dadurch gekennzeichnet, daß die Grate (21) der Gewinde (20) abgestumpft sind.

**Claims**

1. Pressure roller for eliminating bubbles, for a device of a type comprising at least one bearer shaft (10a, 10b) joined to a part (2) housing a vibrator (3) which generates vibrations, the direction of which is roughly perpendicular to the said bearer shaft, the said pressure roller being characterized in that it is formed from two identical half rollers (1a, 1b) disposed coaxially and mounted on two internal cylindrical sleeves (12) in such a way that they can rotate freely, the sleeves (12) being joined to the two ends of the said bearer shaft (10a, 10b) by means of a joint (14, 15) which gives slight angular clearance, solely in the plane perpendicular to that of the working area and in the direction of movement of the device, of the axis of each half roller (1a, 1b) in relation to the axis of the bearer shaft (10a, 10b), the latter being joined at its centre to the frame (3, 4) of the said device by means of a removable connecting part (2).

2. Pressure roller as claimed in claim 1, characterized in that the said internal cylindrical sleeve (12) of each half roller (1a, 1b) is slipped onto one of the ends of the bearer shaft (10a, 10b); this end (14) is spherical and corresponds in diameter to that of the said sleeve and has running through it a pin (15) the ends of which are joined to the sleeve and the axis of which is orthogonal to both the axis of the shaft and to the direction (16) in which the vibrations are applied, the spherical part (14) being roughly in the centre of the pressure roller (1a, 1b).

3. Pressure roller as claimed in claim 1 or 2, characterized in that the cylindrical external surface of each half roller (1a, 1b) comprises, from one end to the other, a continuous helical groove (18), the projecting parts (19) formed by this groove having threads (20) which run in a direction opposite to that of the groove (18) and which are considerably smaller in depth and pitch to those of the groove.

4. Pressure roller as claimed in claim 3, characterized in that the end parts of the half rollers (1a, 1b) are rounded, the said projecting parts (19) with their threads (20) being gradually reduced in height at the said ends in the direction of the ends of the two half rollers.

5. Pressure roller as claimed in claims 3 or 4, characterized in that the edges (21) of the threads (20) are bevelled.

FIG.1.

FIG.2.

EP 0 251 964 B1

FIG. 3.

EP 0 251 964 B1

FIG.5.

FIG.4.